# EUROPEAN PATENT APPLICATION

(11) **EP 4 422 294 A1**
(43) Date of publication of application: **28.08.2024**
(21) Application number: 23157925.1
(22) Date of filing: 22.02.2023
(51) Int. Cl.: H04W 56/00

(54) **WIRELESS NETWORK SYNCHRONIZATION**

(71) Applicant: Siemens Aktiengesellschaft, 80333 München (DE)
(72) Inventor: Fiorentino, Vincenzo, 90491 Nürnberg (DE)
(74) Representative: Siemens Patent Attorneys

(57) **Abstract**

A method of network (1, 2) synchronization between a first network (1), preferably a private network, and a second network (2), preferably a public network neighboring the private network, the second network preferably neighboring the first network in the spatial domain and/or the frequency domain, comprising the steps of: Synchronizing, by the first network (1), an RF signal (3) transmission over the air in the first network (1) based on timing information (4) of the second network (2), wherein the timing information (4) serves as a timing source for configuring the RF signal (3) transmission in the first network (1).

## Description

### TECHNICAL FIELD

The disclosed embodiments relate to wireless systems and wireless communication networks. The present disclosure generally relates to network synchronization, and more specifically to synchronization of a cellular communication network, preferably a TDMA (time division multiple access) network.

### BACKGROUND

Cellular mobile communication networks provide data links for mobile devices and/or fixed devices on a network. This is done by providing access points or base stations that provide wireless connections to the mobile device and/or fixed devices.

Network synchronization is a strict requirement for cellular mobile networks. As soon as cells have a neighbor relationship, network synchronization may be required in the frequency and/or time domain.

Concerning the LTE resource grid, where uplink and downlink traffic are scheduled, even less room for time and frequency deviations is allowed: For LTE-TDD, the network synchronization requirement is in the range of microseconds in the time domain and a few Hz in the frequency domain.

With the advent of 5G with its extremely flexible specifications synchronization requirements and measurements are even more important. For example, 5G can be implemented in either standalone (SA) or non-standalone, NSA, mode. In NSA, the control plane and uplink are done on LTE. Furthermore, traffic scheduling is very adaptable, enabling FDD and/or TDD operation modes to combine into a multimode network; FDD or TDD can be selected based on efficiency, depending on channel conditions. With such architecture and scheduling flexibility, rigorous network synchronization requirements are required. Furthermore, Non-Public Networks, NPNs, i.e., private, 5G networks may be provided. NPNs can be deployed using shared licensed spectrum. NPNs can be deployed as standalone networks as well, either using licensed or unlicensed spectrum. 3GPP's definition of Non-Public Network is laid out in Release 16, and refined in Release 17.

According to a known synchronization technique for a digital cellular communication network, e.g., from US patent application publication US 5 519 710 A, a reference cell site broadcasts a reference timing signal at periodic intervals over radio propagation paths using a dedicated transmitter or via respective landlines. A plurality of subordinate cell sites are provided with a dedicated receiver for receiving the timing signal to adjust their slot timing. However, it is impossible to provide precision timing adjustment due to the inherent differences in length of the propagation paths and the landlines.

### SUMMARY

It is thus an object of the present invention to further improve network synchronization techniques.

According to a first aspect a method of network synchronization between a first network, preferably a private network, and a second network, preferably a public network neighboring the private network, is proposed. Preferably the second network is neighboring the first network in the spatial domain and/or the frequency domain. The method comprising the step of synchronizing, by the first network, an RF signal transmission over the air in the first network based on timing information of the second network, wherein the timing information serves as a timing source for configuring the RF signal transmission in the first network.

According to a second aspect a first network, preferably comprising an RF receiver and one or more base stations, operative to perform the method steps according to first aspect is proposed.

Further aspects comprise a RF receiver and/or a base station and/or other network equipment operative to carry out the embodiments described herein.

### BRIEF DESCRITPION OF THE DRAWINGS

Figure 1 shows an illustration of time-synchronized RF signal transmissions/receptions by a first and a second base station in the time domain.
Figure 2 shows an illustration of RF signal transmissions/receptions and respective base stations with a time delay.
Figure 3 shows an illustration of a factory located inside the coverage are of a public network.
Figure 4 shows an illustration of an RF receiver for receiving timing information.
Figure 5 shows an illustration of a reference clock for generating a timing reference.
Figure 6 shows an illustration of network equipment of private network infrastructure.
Figure 7 shows an illustration of a private network infrastructure according to an embodiment.
Figure 8 shows an illustration of a private network infrastructure according to a further embodiment.
Figures 9 to 15 show exemplary method steps.

### DETAILED DESCRIPTION

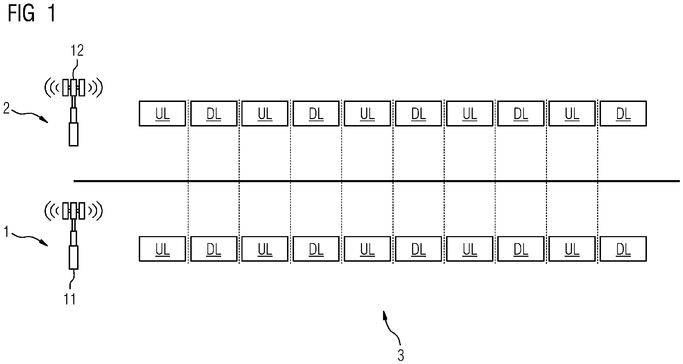

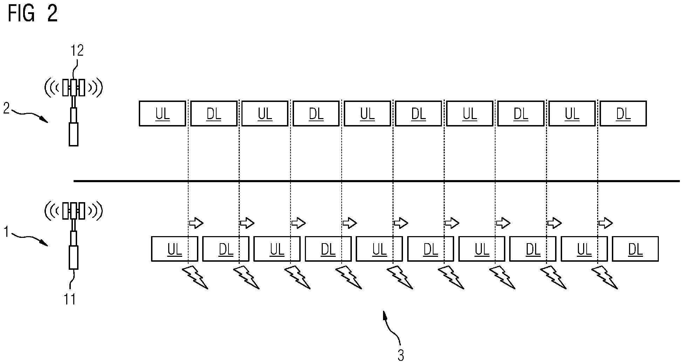

In a perfectly time-synchronized case as shown in Figure 1, the uplink and downlink timeslots UL, DL in the time domain are in sync, i.e., synchronized. Here, the time-synchronized UL, DL timeslots and corresponding RF signal 3 transmissions/receptions by a first and a second base station 11, 12 in the time domain are shown. The first base station 11 may belong to a first network 1, and the second base station 12 may belong to a second network 2. Thus, if RF signals 3 are transmitted by the first base station 11 the RF signals 3 are synchronized to the RF signals 3 transmitted by the second base station 12. The RF signals are transmitted in slots as shown in Figures 1 and 2.

Figure 2 shows an illustration of RF signal 3 transmissions/receptions and respective base stations 11, 12 with a time delay. In Figure 2, with the added time delay, parts of the uplink and downlink timeslots UL, DL, and thus the RF signal 3 transmissions, are now interfering with each other, having a negative impact on the RF signal quality in the time domain.

Networks of different operators typically operate on different frequencies and/or with different frequency bands. However, they are still subject to interference in particular from the neighboring frequencies and/or neighboring frequency bands. Interference may for example comprise unwanted ghost carriers in the spectrum, increasing the probability that the ghost carrier of network interferes with the "real" carrier. For example, in addition to the spectrum usage rights in the 3400-3700 MHz bands, further spectrum in the 3700-3800 MHz band is available for local assignments, i.e., private networks. In particular, some factories or sites may require spectrum for separate, autonomous telecommunications networks. Such local applications may use the 3700-3800 spectrum, in particular for industrial automation, but also for agriculture and forestry, machine control, and/or in-house communication. It is therefore important to ensure radio compatibility between adjacent areas in order to guarantee an interference-free spectrum use in adjacent geographic areas and/or of adjacent (frequency) spectrum. Thus, the aim is to enable unrestricted use for adjacent spectrum and contribute to efficient spectrum use, in particular with the usage of the spectrum of 3400-3700 Mhz.

In the case of synchronized networks, no guard band is generally needed between the frequency block of one network operator using TDD and the frequency block of an adjacent network operator. In the case of unsynchronized and semi-synchronized networks. Any necessary guard bands may be implemented using spectrum from both adjacent operators of local networks. Any deviations may require bilateral or multilateral agreements between the network operators concerned.

The embodiments and aspects disclosed herein allow spectrum usage in such a way that the spectrum usage is feasible in a coverage area without causing significant interference to adjacent spectrum usages and/or is compatible with other spectrum usages.

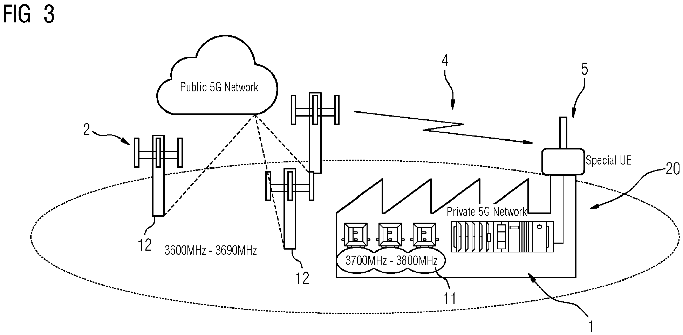

Turning to Figure 3 a factory 20 located inside the coverage are of a public network is shown. As shown, the one or more base stations 12 of the public network 2 at least partially cover the area of the factory 20 site. Thus, a private network 1 set up covering the factory 20 site necessarily is at least partially covered by the public network 2. A Standalone Non-Public Network, SANPN, is an example of a private 5G network which has been deployed separately to the public 5G network. As such, the private 5G network is standalone, with no dependencies on the public 5G network.

For example, in Germany the frequency spectrum allocation for a private network 1, such as a 5G campus network, is from 3700MHz to 3800MHz. The operator of the public network 2 may own a frequency band of 90MHz for providing public service ending at 3690MHz. If a private network 1 is operated in an area where there is coverage of the public network 2 it may be advisable to operate the public network 2 and the private network 1 in a synchronized manner, i.e. to enable synchronized network operation between adjacent networks 1, 2 of different operators for reasons of spectrum efficiency as described herein. Thus, in order to avoid interference with the public network 2, the private network 1 must be synchronized with the public network 2 and/or additionally use the same frame format and/or slot format. Otherwise, a guard band of at least 25-30MHz may be required. This means that the private network may only start using the spectrum at 3720MHz which may result in a loss of 20 MHz of the available channel.

Thus, a guard band of 20 MHz may be added to the private network spectrum and/or the public network spectrum. This means the private network may use the frequency band from 3720MHz up to 3800MHz, losing 20 MHz of capacity, i.e. 20% of the available spectrum.

The drawbacks and disadvantages are avoided, and the efficiency of the spectrum usage is improved by synchronizing, by the first network 1, an RF signal transmission over the air in the first network 1 based on timing information 4 of the second network 2, wherein the timing information 4 serves as a timing source for configuring the RF signal transmission in the first network 1.

As discussed herein, a RF receiver 5, such as a user equipment, also referred to as special UE, may be used in order to enable synchronization for example with and/or based on the downlink frame(s) of the public network 2 and/or furthermore to acquire the frame format used in the public network 2. The acquired synch information, i.e., timing information 4, may be provided to a reference clock that generates a timing reference for the private network 1.

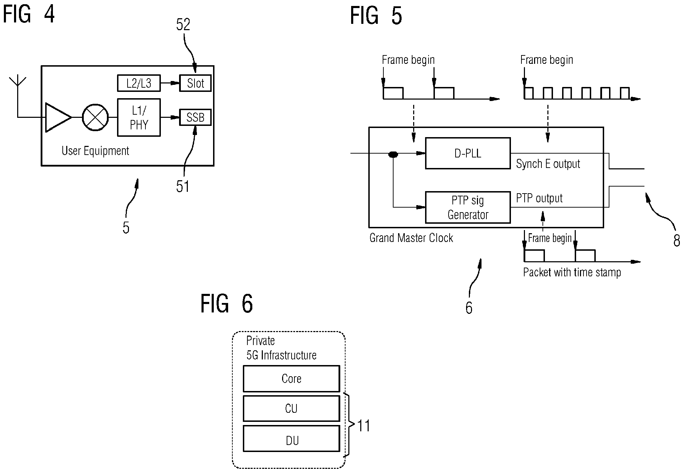

The reference clock may be a grand master clock that can generate a timing reference, e.g., according SynchE and/or PTP 1855v2 or on both of them, as shown in Figure 5.

The frame format and/or slot format information may be sent, e.g., by the RF receiver, to the private network's base station 11, such as a gNB, so that together with the sync information 4, the base station 11 may apply the frame and/or same slot format as the public network 2 and thereby avoid interference.

Thus, as shown in Figure 3 the factory 20 may be located inside the coverage area of a public network 1 operating in the adjacent frequency band. Deploying non-synchronized frame formats in two neighboring networks 1, 2 may result in BS-BS and/or UE-UE interference that could impact the performance. A private network 1 equipped with a special UE 5 capable of retrieving sync information 4 from and/or slot format of the public network 2 is proposed, that enables the private network 1 inside the factory 20 to synchronize to the public network 2.

Turning to Figure 4 an illustration of an RF receiver 5 for receiving timing information is illustrated. As mentioned, the RF receiver 5 may be a UE, also referred to as special UE. It also should be understood that RF refers to radio frequency. The UE 5 may contain a SIM of the adjacent public operator so it can read all signals and access to the network. A SIM, i.e., a Subscriber Identity Module or Subscriber Identification Module, may be provided in the form of an integrated circuit, IC, intended to securely store the international mobile subscriber identity, IMSI, number and/or its related key, which are used to identify and/or authenticate a subscriber on a said UE. The SIM may thus store network-specific information used to authenticate and/or identify subscribers on the network, i.e., said public network 2.

The UE 5, e.g., after commencing operation, may start performing an access procedure to access the public network 2, e.g., based on the network-specific information stored on the SIM. Thereby and/or thereupon, the UE 5 may be synchronized, e.g., via the Synchronization Signal Block, SSB, 51 of the public network 2. The SSB 51 may comprise a primary and a secondary synchronization signal in order to provide synchronization to a downlink frame of the public network 2. Thus, the SSB may serve as a timing information. In any case only a part of the SSB, such as the primary synchronization signal and/or the secondary synchronization signal, may serve as a (basis for) the timing information. This timing information is transmitted over the air by the second network. The timing information may be received by the UE 5. The UE 5 may thus comprise a SSB module 51 implemented in software and/or in hardware. The SSB module 51 as shown in Figure 4 may generate a signal pulse at the beginning of each downlink frame. Thereby the UE 5 may generate or may be used to generate a timing reference based on the timing information received from the public network 2.

This signal pulse, generated by the UE 5, may thus indicate the beginning of a downlink frame. The signal pulse may be transmitted by the UE 5 and/or received by a reference clock such as a Grand Master Clock which includes a Digital PLL that generates a very highly stable clock signal to feed the distributed unit, DU, or gNB or a base station (component) in general.

An illustration of a reference clock 6 for generating a timing reference is shown in Figure 5. The reference clock 6 may comprise a D-PLL and/or a PTP signal generator as shown in Figure 5. Hence, the signal pulse (from the RF receiver 5) indicating the start of the DL frame can be used to feed a PTP signal generator which outputs one or more data packets with a time stamp, e.g., according to the PTP 1588v2 protocol. Then the procedure according to the PTP may be executed between the reference clock 6, also referred to and known as Grand Maser Clock, and the base station (component), such as a distributed unit. The base station, such as the gNB, can use only one or both Synch E and PTP synchronization signals.

Figure 6 shows an illustration of network equipment of private network 1 infrastructure. Such a private network 1 may comprise one or more base stations, e.g., a gNB, that in turn comprise a Central Unit, CU, and Distributed Unit, DU, as shown, which are connected by a communication interface called F1, cf., e.g., TS 38.473. The CU may provide support for the higher layers of the protocol stack such as SDAP, PDCP and/or RRC while the DU may provide support for the lower layers of the protocol stack such as RLC, MAC and Physical layer.

A so called Backhaul may connect the core (network) to the CU. The core network may provide services to the one or more device which are (inter-)connected by the access network, comprising the CU and DU. For example, the core network may aggregate the data sent by the one or more devices in the factory and/or provide a result of that aggregation and/or further processing in return to the one or more devices.

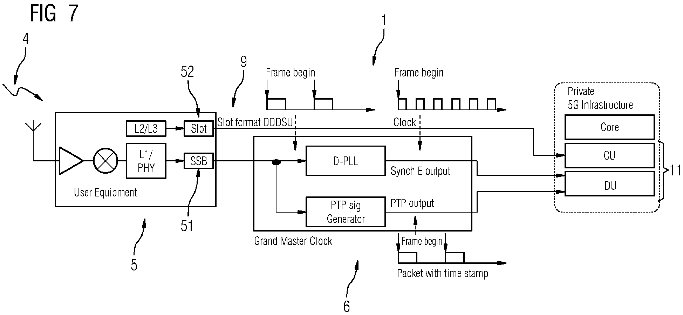

Figure 7 shows an illustration of a private network 1 infrastructure according to an embodiment.

In contrast to a network, such as a public network, that offers mobile network services to the general public, a non-public network, NPN, also referred to as private network 1, provides network services to a clearly defined user organisation or group of organisations. The private network 1 is deployed on the organisation's defined premises, such as a campus or a factory. All network equipment may be located inside the logical perimeter of the defined premises, e.g., said factory. Furthermore, the private network 1 is separate from the public network, i.e., with no or only limited communication possibility between the private network and the public network. Thus, the private network 1, e.g., its radio access network and/or its core network, may be logically isolated from the public network.

As shown, the private network may comprise a RF receiver 5, that is connected to a reference clock 6 and/or to a base station (component) 11. The RF receiver 5 may be connected via a fist interface to the reference clock 6, whereas it may be connected via a second interface to the base station (component) 11. The RF receiver 5, the reference clock 6 and the network equipment CU, DU as described in connection with Figures 4, 5, and 6 may be used to that end.

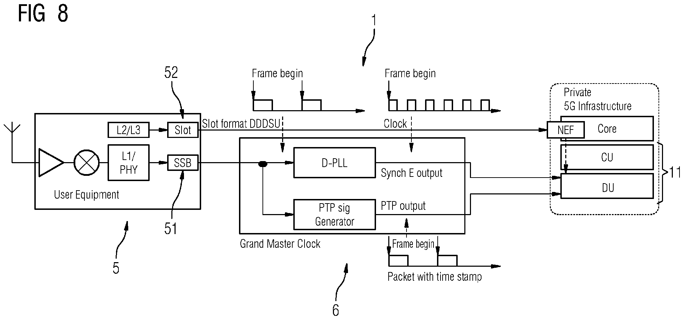

Once the RF receiver 5, i.e. the UE shown in Figure 8, has acquired the synchronization information 4, as described herein, it may read the broadcast channel BCH and/or derive a frame format 9, which is for example available from the System Information Block 1, SIB1, of the public network. The public network may be operated using the DDDSU format or pattern, where D represents a downlink slot, S a special slot, and U an uplink slot. In some cases, the slot format is not communicated in the SIB 1 of the BCH, but the RF receiver may receive this information during the attach procedure in the IE tdd-ul-dl-ConfigurationCommon, cf. TS38.213, par 11.1 and 11.1.1). A software and/or firmware module 52, referred to as "Slot" in Figures 4, 7 and 8, may serve for interacting with the layer 2, L2, and or layer 3, L3, of the UE to obtain the frame format and/or slot format. This frame format information 9 may then be transmitted to the CU of the gNB. The communication between the UE and the DU/gNB can be implemented via any protocols like NETCONF or based on API.

Figure 8 shows an illustration of a private network 1 infrastructure according to a further embodiment. As an alternative, to the embodiment of Figure 7, the information concerning the frame and/or slot format 9 could also be sent to a Network Exposure Function of the core network. Then a core network function may send the frame/slot format information 9 to the corresponding network element CU, DU, i.e., the base station (component(s)) 11, such as the gNB shown.

Thus, mechanisms are disclosed, wherein, e.g., by using a RF receiver 5, such as a UE, with some special functions 51, 52, that enables a private network 1 to synchronize automatically to an adjacent public network, resulting in a saving of spectrum capacity, that otherwise has to be given up from the public and/or private network. Additionally, the RF receiver 5 may also read the public network's frame format used and supplies this information to the private network which may then adopt the frame format of the public network. Thereby, the spectrum loss due to a guard band may be avoided. Furthermore, in case the frame format 9 of the public network is changed, there is no need to manually reconfigure the private network as it may receive the updated frame format information from the RF receiver 5 and may then for example automatically adapt the frame format used in the private network 1 to the new frame format or slot format or the configuration of the same.

For example, by way of said RF receiver 5 the private network 1 may be synchronized to the public network. The RF receiver may forward the DL frame synchronization signal to a reference clock, such as a Grandmaster Clock, or directly to the baste station (component), such as a gNB, that in turn generates either a SynchE or PTP 1588v2 signal or both for the base station and or the private network. Plus, the RF receiver 5 may detect the frame and/or slot format 9 used by the public network and sends it to the private network, so that the private network will automatically adopt it. The same approach can be applied also in other scenarios, i.e, first network 1 and a second network 2 in general.

Further embodiments are provided in the following.

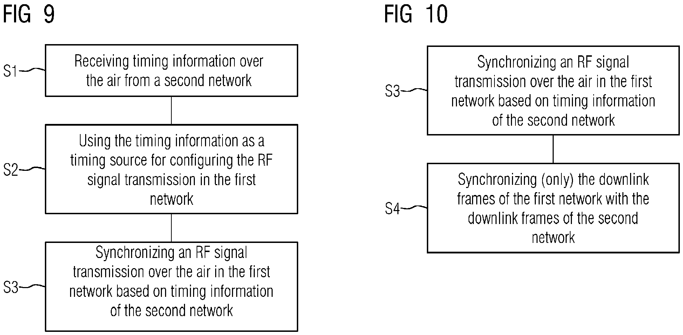

As shown in Figure 9, in a first step S1, timing information may be received, for example by a RF receiver, over the air from a second network. In a second step S2, the timing information may be used as a timing source for configuring the RF signal transmission in a first network. Thus, in a third step S3, an RF signal transmission over the air in the first network may be synchronized based on timing information of the second network.

Thereby, network synchronization between a first network, preferably a private network, and a second network, preferably a public network neighboring the private network, the second network preferably neighboring the first network in the spatial domain and/or the frequency domain, is achieved. Hence, the second network may be neighboring the first network in the frequency domain and/or may be overlapping with the first network in the spatial domain, and vice versa.

As shown in Figure 10, the step S3 of synchronizing an RF signal transmission over the air in the first network based on timing information of the second network may comprise a step S4. The step S4 comprising synchronizing (only) the downlink frames of the first network with the downlink frames of the second network. If both networks are properly time-synchronized, the uplink slots may remain clean. Only the downlink might be affected, depending on the interfering ghost carrier's strength.

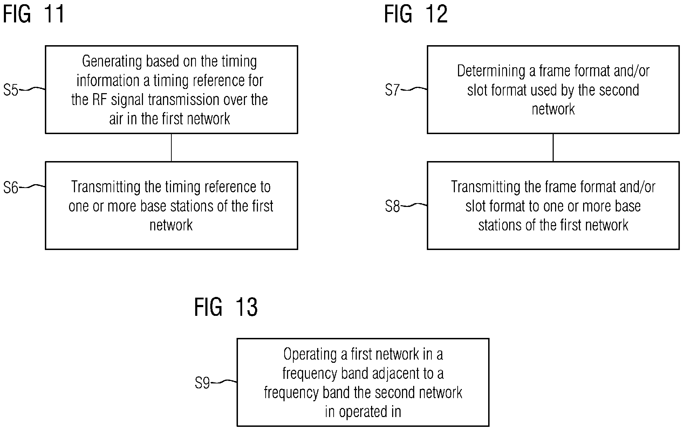

Turning to Figure 11, in a step S5 a timing reference for the RF signal transmission over the air in the first network may be generated based on the timing information, e.g., as obtained by the RF receiver. The timing reference may be generated by reference clock. In a step S6, the timing reference may be transmitted to one or more base stations of the first network.

In accordance with step S7 of Figure 12, a frame format and/or slot format used by the second network may be determined, e.g., by the RF receiver. In a step S8, the frame format and/or slot format may be transmitted to one or more base stations of the first network.

As shown in step S9 of Figure 13, a first network may be operated in a frequency band adjacent to a frequency band the second network is operated in.

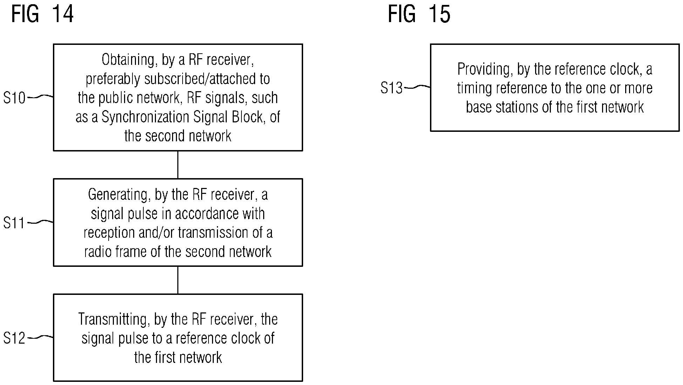

Turning to Figure 14, in a step S10, RF signals, such as a Synchronization Signal Block or a part thereof, of the second network are obtained, by a RF receiver, preferably subscribed/attached to the public network. In a step S11, a signal pulse in accordance with reception and/or transmission of a radio frame of the second network may be generated by the RF receiver. In a step S12, the signal pulse is transmitted by the RF receiver to a reference clock of the first network.

As shown in Figure 15, in a step S13, a timing reference is provided by the reference clock to the one or more base stations of the first network.

Thus, network synchronization, which for example is a requirement for a time division duplex to prevent multi-access and inter-slot interference, is proposed. To that end, a RF receiver, such as a User Equipment, UE, may assist in the synchronization. The RF receiver may help in synchronizing a private network with a neighboring public network.

## Claims

1. A method of network (1, 2) synchronization between a first network (1), preferably a private network, and a second network (2), preferably a public network neighboring the private network, the second network preferably neighboring the first network in the spatial domain and/or the frequency domain, comprising the steps of:
Synchronizing, by the first network (1), an RF signal (3) transmission over the air in the first network (1) based on timing information (4) of the second network (2), wherein the timing information (4) serves as a timing source for configuring the RF signal (3) transmission in the first network (1) .

2. The method according to the preceding claim, Synchronizing, by the first network (1), e.g., using a RF receiver (5) for receiving timing information over the air from the second network (2), the downlink frames of the first network (1) with the downlink frames of the second network (2).

3. The method according to any one of the preceding claims, Generating based on the timing information (4), by the first network (1), e.g., by a reference clock (6) of the first network (1), a timing reference (8) for the RF signal transmission over the air in the first network (1), e.g., according to a Precision Time Protocol and/or a Synchronous Ethernet protocol.

4. The method according to any one of the preceding claims, Transmitting the timing reference (8) to one or more base stations of the first network (1).

5. The method according to any one of the preceding claims, determining, by the first network (1), a frame format and/or slot format (9) used by the second network (2).

6. The method according to any one of the preceding claims, Transmitting the frame format and/or slot format (9), and/or an indication representing the same, to one or more base stations (11) of the first network (1).

7. The method according to any one of the preceding claims, Operating the first network (1) in a frequency band adjacent to a frequency band the second network (2) is operated in.

8. The method according to any one of the preceding claims, Obtaining, by a RF receiver (5), preferably subscribed/attached to the public network, RF signals, such as a Synchronization Signal Block or a part hereof, of the second network (2).

9. The method according to any one of the preceding claims, Generating, by the RF receiver (5), a signal pulse in accordance with reception and/or transmission of a radio frame of the second network (2).

10. The method according to any one of the preceding claims, Transmitting, by the RF receiver (5), the signal pulse to a reference clock (6) of the first network (1).

11. The method according to any one of the preceding claims, Providing, by the reference clock (6), a timing reference to the one or more base stations (11) of the first network (11).

12. The method according to any one of the preceding claims, Determining, by the RF receiver (5), a channel format of the second network, e.g., based on a System Information Block of the second network (2).

13. A first network (1), preferably comprising an RF receiver (5), a reference clock (6) and/or one or more base stations (11), operative to perform the method steps according to any one of the preceding claims.
